Europäisches Patentamt

European Patent Office

Office européen des brevets

(11) Veröffentlichungsnummer: **0 151 716**
**A2**

(12) ## EUROPÄISCHE PATENTANMELDUNG

(21) Anmeldenummer: **84114500.6**

(22) Anmeldetag: **29.11.84**

(51) Int. Cl.⁴: **B 23 K 11/30**

(30) Priorität: **10.02.84 DE 3404692**

(43) Veröffentlichungstag der Anmeldung:
**21.08.85 Patentblatt 85/34**

(84) Benannte Vertragsstaaten:
**AT BE CH DE FR GB IT LI LU NL SE**

(71) Anmelder: **Messerschmitt-Bölkow-Blohm Gesellschaft
mit beschränkter Haftung
Robert-Koch-Strasse
D-8012 Ottobrunn(DE)**

(72) Erfinder: **Nissl, Norbert, Dipl.-Phys.
Altenfurter Strasse 33
D-8899 Aresing(DE)**

(54) Elektrode für ein Widerstandspressschweissgerät.

(57) Die Elektrode ist kraftschlüssig mit einem optischen oder optoelektrischen Beschleunigungsmesser verbunden, dessen Teile sowie dessen Zuleitungen aus elektrisch nicht leitendem und nicht magnetischem Material bestehen.

FIG. 1c

## Elektrode für ein Widerstandspreßschweißgerät

Die Erfindung betrifft eine Elektrode mit einer Einrichtung zur Messung der Beschleunigung für ein Widerstandspreßschweißgerät mit Stromregelung.

Aus der DE-OS 30 25 515 ist ein Verfahren und eine Vorrichtung zur Steuerung des Widerstandsschweißens bekannt, bei welchem mittels eines piezoelektrischen Beschleunigungsmessers, der an mindestens einem der beiden Elektrodenhalter befestigt ist, die auftretenden Beschleunigungen vorzugsweise parallel zur Achse des Elektrodenhalters gemessen werden. Für den Schweißvorgang soll bei diesem bekannten Verfahren die Stärke des elektrischen Stromes auf den größtmöglichen, jedoch unter dem sog. Schweißspritzer verursachenden Wert eingestellt werden. Hierzu werden während des Schweißvorganges die an dem Elektrodenhalter auftretenden Beschleunigungen gemessen, die beim Auftreten von Schweißspritzern charakteristische, hohe Werte erreichen. Beim Auftreten derartiger Beschleunigungsspitzen wird entweder der Schweißvorgang unterbrochen oder die Stromstärke für den nächsten Schweißvorgang reduziert.

Bei Versuchen mit piezoelektrischen oder anderen Beschleunigungsmessern, welche ein elektrisches Meßsignal liefern, wurde festgestellt, daß während des Schweißvorganges voraussichtlich aufgrund der hohen Stromstärken und der damit verbundenen magnetischen Felder Störungen des Meßsignals auftreten, welche Beschleunigungen vortäuschen. Derartige Beschleunigungsmesser sind daher zur Stromregelung während des Schweißvorganges, beispielsweise mittels Phasenanschnittssteuerung, ungeeignet.

Es ist daher Aufgabe der Erfindung, eine Elektrode mit einer Einrichtung zur Messung der Beschleunigung zu schaffen, welche für ein Widerstandspreßschweißgerät mit Stromregelung während des Schweißvorganges geeignet ist. Diese Aufgabe wird durch eine nach den kennzeichnenden Merkmalen des Patentanspruchs 1 ausgebildete Elektrode gelöst.

Durch die Verwendung eines optischen oder optoelektrischen Beschleunigungsmessers ist es möglich, sämtliche mit der Elektrode verbundenen Bestandteile des Beschleunigungsmessers aus elektrisch nicht leitendem und nicht magnetischem Material herzustellen, so daß selbst starke magnetische oder elektromagnetische Felder keinen Einfluß auf das Meßsignal haben. Aus diesem Grund wird es auch möglich, den Beschleunigungsmesser direkt mit der Elektrode zu verbinden und nicht, wie bei der DE-OS 30 25 515, an dem Elektrodenhalter oder weiter von der Schweißstelle entfernten Teilen des Gerätes anzubringen. Je näher aber die Beschleunigungsmessung an der eigentlichen Schweißstelle vorgenommen wird, desto genauer kann die Beschleunigungsmessung und somit die Stromregelung sein. ·

Vorteilhafte Ausgestaltungen der erfindungsgemäßen Vorrichtung sind aus den Unteransprüchen zu entnehmen und sollen anhand eines in den Figuren teilweise schematisch dargestellten Ausführungsbeispieles näher erläutert werden.

Es zeigen:

Fig. 1a, 1b
und 1c  verschiedene Ansichten und Querschnitte
durch eine Elektrode mit einem optischen Beschleunigungsmesser;

Fig. 2 den prinzipiellen Aufbau eines Sensors für einen optischen Beschleunigungsmesser gemäß Fig. 1a - c;

Fig. 3 einen Querschnitt durch einen weiteren Sensor für einen optischen Beschleunigungsmesser.

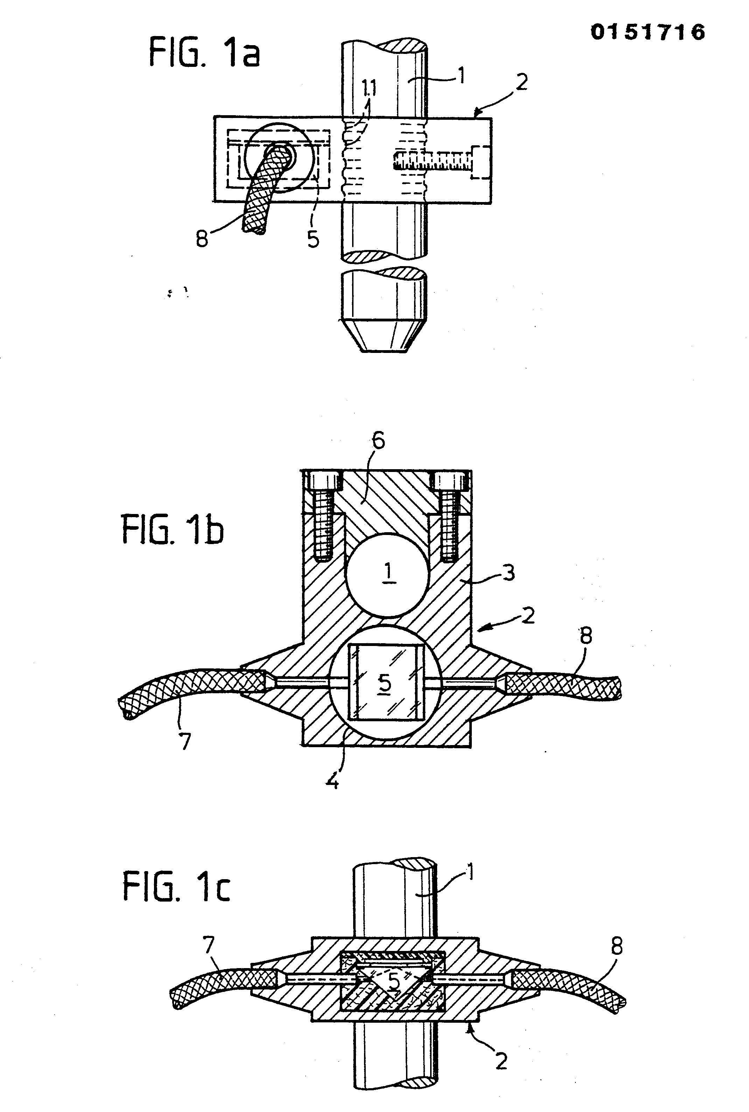

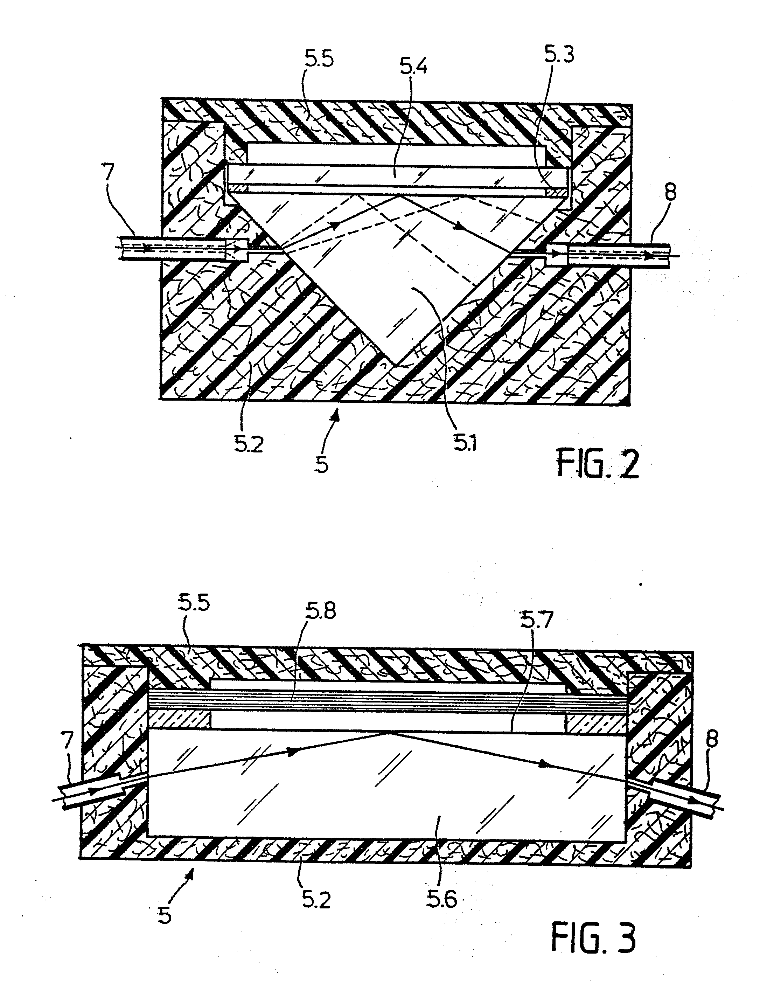

Fig. 1a zeigt eine Seitenansicht einer Elektrode 1, die kraftschlüssig mit einem optischen Beschleunigungsmesser 2 verbunden ist. Der Beschleunigungsmesser 2 weist ein zweiteiliges Gehäuse aus glasfaserverstärktem, hochfestem Kunststoff auf, von dem der eine Teil 3 in einem zylindrischen Innenraum 4 einen Sensor 5 aufweist (Fig. 1b). Der genaue Aufbau des Sensors 5 wird später anhand der Fig. 2 und 3 beschrieben.

Zur kraftschlüssigen Verbindung des Gehäuseteils 3 mit der Elektrode 1 ist ein Gegenstück 6 vorgesehen, mittels welchem die Elektrode 1 zwischen den Teilen 3 und 6 eingeklemmt wird. Die Verbindung der Teile 3 und 6 geschieht vorteilhafterweise durch Klebung in Verbindung mit Kunststoffschrauben, wobei ein Formschluß mit der Elektrode 1 dadurch zustande kommt, daß letztere im Bereich der Befestigung Rillen 1.1 aufweist, die in entsprechende Rillen der Gehäuseteile 3 und 6 eingreifen bzw. sich beim Anziehen der Schrauben in diese Teile eindrücken, wodurch die Klebung entsprechend unterstützt wird (Fig. 1a).

An dem Gehäuseteil 3 sind an gegenüberliegenden Seiten Lichtleiter 7 und 8 angebracht, welche durch Bohrungen mit dem Innenraum 4 und dort mit dem Sensor 5 in Verbindung stehen. Der Lichtleiter 7 dient als Sendelichtleiter und ist mit einer an sich bekannten und nicht näher dargestellten optoelektrischen Sendeeinrichtung verbunden. Das durch den Sendelichtleiter 7 eintretende Licht wird durch den Sensor 5 beschleunigungsabhängig moduliert und wird über den Empfangslichtleiter 8 einer ebenfalls bekannten und nicht näher dargestellten optoelektrischen Empfangs- und Signalverarbeitungseinrichtung zugeführt. Diese Einrichtung erzeugt ein beschleunigungsabhängiges Stell- oder Regelsignal für die Stromregelung während des Schweißvorganges. Die Meßachse des Sensors 5 ist im dargestellten Falle parallel zur Richtung der Elektrodenlängsachse.

Sowohl der Innenraum 4 des Gehäuseteils 3 als auch die Lichtleiter 7 und 8 mit ihren Verbindungen zum Gehäuseteil 3 sind hermetisch dicht und resistent gegen die beim industriellen Schweißen auftretenden Verschmutzungen ausgebildet und können mit einem Schutzüberzug gegen mechanische und thermische Einflüsse versehen sein. Bei Verwendung von Kunststoff- und Glasmaterial für den Beschleunigungsmesser 2 werden genügend hohe Resonanzfrequenzen erreicht, um das Nutzsignal unverzerrt messen zu können. Die Frequenz des Nutzsignals, d.h. also die Frequenz der auftretenden Beschleunigungen, beträgt typischerweise einige 100 Hz, wohingegen die Eigenfrequenzen der Bestandteile des Beschleunigungsmessers 2 typischerweise über 10 KHz liegen. Der Dynamikbereich des noch näher beschriebenen Sensors 5 umfaßt typischerweise $\pm$ 1000 g (g = Erdbeschleunigung), womit sowohl die mittlere Amplitude des Nutzsignals von ca. 50 g als auch das Aufschlagen der Elektrode auf das Werkstück mit etwa 600 g erfaßt wird.

...

Der in Fig. 2 dargestellte, fest in dem Innenraum 4 des Gehäuseteils 3 verankerte Sensor 5 ist prinzipiell aus der DE-PS 26 20 914 und beruht auf dem sog. Goos-Haenchen-Effekt, der darin besteht, daß an den Randzonen eines endlich ausgedehnten optischen Wellenfeldes bei Totalreflexion an der Grenze zwischen einem optisch dichteren und einem optisch dünneren Medium Beugungseffekte auftreten, die einen Übergang von Energie in das optisch dünnere Medium bewirken. Diese Energie läuft dann innerhalb einiger Wellenlängen Abstand vom dichteren Medium als Oberflächenwelle parallel zur Grenzfläche und tritt an der entgegengesetzten Randzone des Wellenfeldes wieder in das optisch dichtere Medium über, so daß insgesamt eine Totalreflexion der Energie entsteht. Nähert man vom optisch dünneren Medium her der Grenzfläche einen Körper, der in der Lage ist, die Oberflächenwelle umzuleiten oder zu absorbieren, so ist die Totalreflexion gestört, und zwar um so mehr, je näher der Körper an die Grenzfläche gebracht wird. Somit ist eine Modulation des im dichteren Medium reflektierten Lichtes durch beispielsweise elastische Auslenkung eines innerhalb einiger Wellenlängen von der Grenzfläche befindlichen Körpers möglich.

Bei dem Ausführungsbeispiel gemäß Fig. 2 wird das aus dem Sendelichtleiter 7 austretende Licht in ein Rechteckprisma 5.1 hineingebrochen, welches in einem entsprechenden geformten Kunststoffgehäuse 5.2 gelagert bzw. eingebettet ist. Nach Totalreflexion des Lichtstrahles an der Hypothenuse des Prismas 5.1 fällt das Licht auf die gegenüberliegende Kathete und wird an dieser aus dem Prisma herausgebrochen und z. Teil in den Empfangslichtleiter 8 eingespeist, durch welchen es der optoelektrischen Empfangs- und Signalverarbeitungseinrichtung zugeführt wird.

Eine mit Hilfe einer auf die Hypothenuse aufgedampften Abstandsschicht 5.3, z.B. aus Quarzglas, im Abstand von etwa zwei Wellenlängen des verwendeten Lichtes von der Hypothenuse angebrachte Glasplatte 5.4 stellt mechanisch gesehen etwa einen aufgelegten, an den Enden fest eingespannten Balken dar. Dieser Balken biegt sich bei senkrecht zur Hypothenuse auftretenden Beschleunigungen entsprechend seiner mechanischen Parameter nach oben oder unten durch und vergrößert oder verkleinert dadurch den Spalt zur Hypothenuse des Prismas 1. Dadurch wird der Grad der "Totalreflexion" entsprechend vergrößert oder verkleinert, ausgehend von einem durch die Wahl der zugrundegelegten Spaltbreite bereits entsprechend verminderten Faktor der Totalreflexion. Ein Nullabgleich und eine ggf. gewünschte Linearität wird in diesem Fall durch entsprechende Signalverarbeitung in der optoelektrischen Signalverarbeitungseinrichtung erreicht.

Die Oberflächengüte der Hypothenuse des Prismas 5.1 und der dem Spalt zugewandten Seite der Glasplatte 5.4 ist zu etwa 1/4 der Wellenlänge des verwendeten Lichtes gewählt.

Die durch entsprechende Blendenbohrungen vor der Lichtaustrittsfläche des Sendelichtleiters 7 bewirkte Restdivergenz des Lichtstrahles (gestrichelt dargestellt) wirkt sich positiv in Form einer geringen Empfindlichkeit des Aufbaues gegenüber Montagetoleranzen aus. Hierzu kann auch dem Empfangslichtleiter 8 eine flächenhaft integrierend wirkende Mattscheibenstruktur vorgeschaltet sein. Um Verschmutzungen des Spaltes zwischen der Glasplatte 5.4 und dem Prisma 5.1 zu vermeiden, ist ein das Gehäuse 5.1 hermetisch abschließender Deckel 5.5 vorgesehen. Außerdem kann der eingeschlossene Innenraum zumindest teilweise evakuiert oder mit einem trockenen Inertgas gefüllt sein.

Ein weiteres Ausführungsbeispiel eines geeigneten Sensors zur Beschleunigungsmessung ist in Fig. 3 dargestellt, bei dem statt eines Prismas ein quaderförmiger Glasblock 5.6 in einem entsprechend geformten Gehäuse 5.2 gebettet ist. Die Sende- und Empfangslichtleiter 7 und 8 sind an beiden Seiten des Gehäuses unter einem schrägen Winkel zu den Seitenflächen des Glasblockes derart angebracht, daß es an der Oberfläche 5.7 des Glasblockes zu einer Totalreflexion kommt. In gleichem Abstand wie bei dem Ausführungsbeispiel gemäß Fig. 2 ist über dieser Fläche 5.7 ein Balken, beispielsweise aus Kunststoff angeordnet, der sich unter dem Einfluß von Beschleunigungskräften durchbiegt und die Spaltbreite zwischen sich und der Oberfläche 5.7 des Glasblockes 5.6 verändert. Auch in diesem Fall wird das Gehäuse 5.2 durch einen Deckel 5.5 hermetisch dicht abgeschlossen.

*MBB*

Patentabteilung

1

**0151716**
08.02.1984
BT01 Mn/bk
9514

Elektrode für ein Widerstandspreßschweißgerät

PATENTANSPRÜCHE

1. Elektrode mit einer Einrichtung zur Messung der Beschleunigung für ein Widerstandspreßschweißgerät mit Stromregelung, g e k e n n z e i c h n e t durch mindestens einen mit der Elektrode (1) kraftschlüssig verbundenen, optischen oder optoelektrischen Beschleunigungsmesser (2).

2. Vorrichtung nach Anspruch 1, dadurch g e - k e n n z e i c h n e t , daß die Teile (5) des Beschleunigungsmessers (2) sowie dessen Zuleitungen (7,8) aus elektrisch nicht leitendem und nicht magnetischem Material bestehen.

3. Vorrichtung nach Anspruch 1 oder 2, dadurch g e k e n n z e i c h n e t , daß der Beschleunigungsmesser (2) ein Gehäuse (3) aus faserverstärktem, insbesondere glasfaserverstärktem Kunststoff aufweist.

4. Vorrichtung nach einem der Ansprüche 1 bis 3, dadurch g e k e n n z e i c h n e t , daß die Zuleitungen (7,8) des Beschleunigungsmessers (2) Lichtleiter sind.

5. Vorrichtung nach Anspruch 4, dadurch g e - k e n n z e i c h n e t , daß die Lichtleiter (7,8) mit einer elektrisch und magnetisch abgeschirmten optoelektrischen Sende-, Empfangs- und Signalverarbeitungseinrichtung verbunden sind.

...

6. Vorrichtung nach einem der Ansprüche 1 bis 5, dadurch g e k e n n z e i c h n e t , daß der Beschleunigungsmesser (2) durch Formschluß mit der Elektrode (1) verbunden ist.

7. Vorrichtung nach Anspruch 6, dadurch g e - k e n n z e i c h n e t , daß die Elektrode (1) Rillen (1.1) und/oder eine prismatische Riffelung aufweist.

8. Vorrichtung nach einem der Ansprüche 1 bis 7, dadurch g e k e n n z e i c h n e t , daß die Elektrode (1) und der Beschleunigungsmesser (2) miteinander verklebt sind.

9. Vorrichtung nach einem der Ansprüche 1 bis 8, dadurch g e k e n n z e i c h n e t , daß die thermischen Ausdehnungskoeffizienten des Elektrodenmaterials und des mit der Elektrode in Berührung stehenden Teils der Beschleunigungsmesser nahezu gleich sind.

10. Vorrichtung nach einem der Ansprüche 1 bis 9, dadurch g e k e n n z e i c h n e t , daß die das Meßsignal beeinflussenden Bestandteile (5, 5.1, 5.2, ...) des Beschleunigungsmessers (2) einen geringen thermischen Ausdehnungskoeffizienten aufweisen.

11. Vorrichtung nach einem der Ansprüche 1 bis 10, dadurch g e k e n n z e i c h n e t , daß der Beschleunigungsmesser (2) nach außen luftdicht verschlossen ist und evakuiert oder mit einem trockenen Inertgas gefüllt ist.

...

12. Vorrichtung nach einem der Ansprüche 1 bis 11, dadurch g e k e n n z e i c h n e t , daß der Beschleunigungsmesser (2) und die Zuleitungen (7,8) mit einem Schutzüberzug gegen mechanische und/oder thermische Einflüsse versehen sind.

13. Vorrichtung nach einem der Ansprüche 1 bis 12, dadurch g e k e n n z e i c h n e t , daß die Beschleunigungsmesser je zweier Elektroden paarweise aufeinander abgestimmt und abgeglichen sind.

14. Vorrichtung nach einem der Ansprüche 1 bis 13, dadurch g e k e n n z e i c h n e t , daß die Meßeinrichtung zumindest eines Beschleunigungsmessers parallel zur Längsachse der Elektrode (1) ausgerichtet ist.

15. Vorrichtung nach einem der Ansprüche 1 bis 14, dadurch g e k e n n z e i c h n e t , daß die Meßeinrichtung zumindest eines Beschleunigungsmessers senkrecht zur Längsachse der Elektrode (1) ausgerichtet ist.

FIG. 1a

0151716

FIG. 1b

FIG. 1c

9514

FIG. 2

FIG. 3